# EUROPÄISCHE PATENTANMELDUNG

(11) **EP 2 800 245 A1**
(43) Veröffentlichungstag der Anmeldung: **05.11.2014**
(21) Anmeldenummer: 13166034.2
(22) Anmeldetag: 30.04.2013
(51) Int. Cl.: H02K 1/27, H02K 15/16, F02D 9/00

(54) **Elektrischer Antrieb eines KfZ-Aggregats**

(71) Anmelder: Pierburg Pump Technology GmbH, 41460 Neuss (DE)
(72) Erfinder: Zill, Mathias, 01683 Nossen (DE); Lindner, Enrico, 09322 Penig (DE); Schwabbauer, Frank, 04746 Hartha (DE)
(74) Vertreter: Patentanwälte ter Smitten Eberlein Rütten Partnerschaftsgesellschaft

(57) **Zusammenfassung**

Die Erfindung bezieht sich auf ein elektrisches Kfz-Aggregat (10) mit einem elektronisch kommutierten Antriebsmotor (40), der einen permanenterregten Motorrotor (16), einen Motorstator (18) und ein Motorgehäuse (50) aufweist, wobei beim Zusammenbau des Antriebsmotors (40) das vorauseilende Wellenende (26) der Motorrotorwelle (14) in eine feststehende Wellenöffnung (24) eingefädelt wird. Die Motorrotorwelle (14) ist derart ausgebildet, dass beim Zusammenbau das vorauseilende Wellenende (26) der Motorrotorwelle (14) in den Eingriff mit der Wellenöffnung (24) kommt, bevor der permanentmagnetische Motorrotor (16) in den magnetischen Wirkbereich des Motorstators (18) gerät.

## Beschreibung

Die Erfindung betrifft ein elektrisches Kfz-Aggregat mit einem elektronisch kommutierten Antriebsmotor, der einen permanentmagnetischen Motorrotor mit einer Motorrotorwelle, einen Motorstator und ein Motorgehäuse aufweist.

Ein elektrisch angetriebenes Kfz-Aggregat kann vorliegend eine quasikontinuierlich fördernde Pumpe sein, beispielsweise eine Kühlmittel- oder eine Schmiermittelpumpe - kann aber auch als Steller ausgebildet sein, beispielsweise als Drosselklappensteller. Der Motorrotor des elektronisch kommutierten Antriebsmotors weist zur Erzeugung eines elektrischen Feldes mindestens einen Permanentmagneten auf.

Der Motorrotor sitzt auf der Motorrotorwelle und weist einen aus Vollmaterial gefertigten ferromagnetischen Rotorgrundkörper auf, der in axialer Richtung auf die Motorrotorwelle aufgeschoben ist, und der gegebenenfalls Aussparungen zur Aufnahme der Permanentmagnete aufweist.

Derartige Permanentmagnete der Rotorgrundkörper und/oder der Motorstator können empfindlich sein, so dass bei der Montage, d.h. beim Fügen der Motorrotorwelle in den Motorstator, darauf geachtet werden muss, dass ein Verkratzen bzw. eine Beschädigung der Oberflächen und/ oder der Beschichtung vermieden wird. Dies wird während der Montage dadurch erschwert, dass der Motorrotor durch die radial wirkenden Magnetkräfte radial in eine Richtung gezogen wird, sobald der Motorrotor in den magnetischen Wirkbereich des Motorstators gerät.

Daher ist es die Aufgabe der vorliegenden Erfindung, ein elektrisches Kfz-Aggregat für eine einfache und sichere Montage zu schaffen.

Die Lösung der Aufgabe erfolgt erfindungsgemäß durch ein Kfz-Aggregat mit den Merkmalen des Anspruchs 1.

Beim Zusammenbau des elektronisch kommutierten Antriebsmotors wird das vorauseilende Wellenende der Motorrotorwelle in eine feststehende Wellenöffnung eingefädelt. Die Motorrotorwelle ist längenmäßig derart ausgebildet, dass das beim Zusammenbau vorauseilende Wellenende der Motorrotorwelle schon in Eingriff mit der Wellenöffnung kommt, bevor der permanentmagnetische Motorrotor in den magnetischen Wirkbereich des Motorstators gerät.

Während des Fügens des Motorrotors in den Motorstator sind auf diese Weise störende radial wirkende Magnetkräfte praktisch vollständig ausgeschlossen. Erst nach der Einfügung des vorauseilenden Wellenendes der Motorrotorwelle in die Wellenöffnung wirken die radialen Magnetkräfte zwischen dem Motorrotor und dem Motorstator. Durch diese Maßnahme ist die Motorrotorwelle bereits an ihrem einem Längsende abgestützt, bevor die radialen Magnetkräfte erheblich zu wirken beginnen. Das noch freie nacheilende Wellenende der Motorrotorwelle wird manuell abgestützt, so dass verhindert wird, dass der Motorstator und der Motorrotor während der Montage radial zueinander gezogen werden und zusammenstoßen. Hierdurch wird die bei der Montage bestehende Gefahr einer Beschädigung erheblich verringert.

Der magnetische Wirkbereich des Motorstators wird im Sinne des Hauptanspruches 1 durch den Motorrotor nicht erreicht, solange die radialen Magnetkräfte zwischen Motorrotor und Motorstator weniger als die Hälfte, bevorzugt weniger als 30% und insbesondere bevorzugt weniger als 10% der radialen Magnetkräfte in der axialen Endposition des Motorrotors in dem Motorstator betragen.

Gemäß einer bevorzugten Ausführungsform ist der Permanentmagnet nicht vollständig in den ferromagnetischen Rotorgrundkörper eingebettet. Der Permanentmagnet kann stattdessen von radial außen in eine entsprechende Ausnehmung des Rotorgrundkörpers eingesetzt und von außen "sichtbar" sein.

Eine weitere bevorzugte Ausführungsform sieht vor, dass die Motorrotorwelle durch eine Fügehilfe während der axialen Fügebewegung zunächst zentriert und schließlich eingefädelt wird, bevor nennenswerte radiale Magnetkräfte auf den Motorrotor wirken. Mit dem Begriff "zentriert" ist vorliegend gemeint, dass die endzentrierte Radialposition des vorauseilenden Längsendes der Motorrotorwelle nicht exakt der Radialposition während der Zentrierung entsprechen muss. Durch die Vermeidung von radialen Magnetkräften während des Zentrierens wird die Montage, insbesondere die manuelle Montage, vereinfacht und somit die Gefahr möglicher Beschädigungen verringert.

In einer bevorzugten Ausführung kommen das vorauseilende Wellenende der Motorrotorwelle und die Wellenöffnung miteinander in Eingriff, bevor sich der Motorrotor und die Statorpoleisen des Motorstators in Längsrichtung überlappen.

Solange sich diese beiden Bauteile überhaupt nicht überlappen, sind die radialen Magnetkräfte sehr gering, beziehungsweise belaufen sich auf annähernd Null. Durch die sehr geringen Magnetkräfte besteht während des Montagevorganges keine größere Gefahr, dass der Motorrotor durch Magnetkräfte in eine radiale Richtung gezogen wird und radial an den Motorstator anschlägt.

In einer weiteren bevorzugten Ausführung wird die Wellenöffnung durch einen Spulenträger gebildet, auf den die Motorspulen aufgewickelt sind. Der Spulenträger kann dabei beispielsweise ein - oder zweiteilig aufgebaut sein. Die Wellenöffnung kann durch eine separate Lagerbuchse, beispielsweise eine metallische Lagerbuchse realisiert sein, die in den Spulenträger eingesetzt bzw. eingespritzt ist. Die Statorpoleisen können ebenfalls in den Kunststoff-Spulenträger eingespritzt sein.

In einer weiteren bevorzugten Ausführungsform der Erfindung kann der Spulenträger aus einem Kunststoff gefertigt sein, in welchen bevorzugt ferromagnetische Metallpartikel verteilt eingebettet sind. Die Metallpartikel können dabei aus einer ferromagnetischen Metalllegierung bestehen, um ferromagentische Verluste möglichst gering zu halten. Der ferromagnetische Spulenträger lässt sich beispielsweise durch Spritzgießverfahren bereitstellen. Zur Füllung des Kunststoffes eignet sich dabei insbesondere ein weichmagnetisches Material. Der Spulenträger bildet hierbei auch bevorzugt die Statorpoleisen.

In einer weiteren bevorzugten Ausführungsform sind das vorauseilende Wellenende und/oder die Wellenöffnung derart zirkulär abgeschrägt, dass das Einfädeln des Motorrotors in den Motorstator erleichtert wird. Sowohl das vorauseilende Wellenende der Motorrotorwelle, als auch die Wellenöffnung des Spulenträgers weisen eine definierte Fase auf. Diese Fase vergrößert die Zielfläche, in welche das vorauseilende Wellenende der Motorrotorwelle zur Einfädelung auftreffen muss. Dadurch wird die Montage zusätzlich vereinfacht.

In einer bevorzugten Ausführungsform ist das Kfz-Aggregat ein elektrisch betriebener Drosselklappenstutzen.

Nachfolgend wird die Erfindung an Hand einer bevorzugten Ausführungsform unter Bezugnahme auf die anliegenden Zeichnungen näher erläutert.

Es zeigen:
- Figur 1:: einen Längsschnitt eines als Drosselklappenstutzen ausgebildeten Kfz-Aggregats mit einem elektronisch kommutierten Antriebsmotor;
- Figur 2:: einen Längsschnitt des nicht-montierten elektrischen Antriebsmotors des Kfz-Aggregates aus Figur 1, und
- Figur 3:: einen Längsschnitt des montierten elektrischen Antriebsmotors des Kfz-Aggregates aus Figur 1.

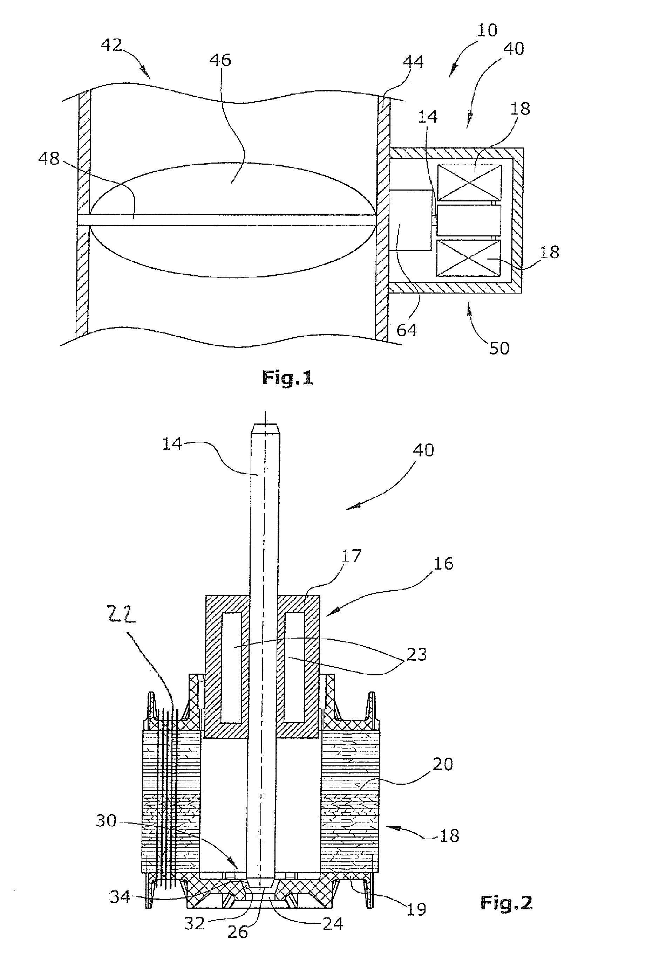

Eine zum Antrieb eines Kraftfahrzeuges (Kfz) vorgesehene Kfz-Brennkraftmaschine weist zur Steuerung ihrer Leistungsabgabe einen Drosselklappenstutzen 42 auf. Der in Figur 1 dargestellte Drosselklappenstutzen 42 sitzt in dem Kfz im Ansaugkanal der Brennkraftmaschine und dient der Einstellung der der Brennkraftmaschine zugeführten Luftmasse.

Der Drosselklappenstutzen weist eine Drosselklappe 46 auf, die beim Betrieb den Leitungsquerschnitt mehr oder weniger frei gibt bzw. verschließt. Der Drosselklappenstutzen 42 weist ferner ein Drosselklappenstutzen-Rohr 44 auf, in dem die Drosselklappe 46 angeordnet ist, die auf einer Drosselklappenwelle 48 sitzt. Die drehbar gelagerte Drosselklappenwelle 48 wird über ein Übersetzungsgetriebe 64 angetrieben. Das Untersetzungsgetriebe 64 wird über einen elektronisch kommutierten Antriebsmotor 40 angetrieben. Über die Drosselklappenwelle 48 ist die Drosselklappe 46 zwischen einer Öffnungsstellung und einer Schließstellung um die Drehachse um ca. 90°drehbar gelagert.

Die Drosselklappenwelle 48 ist über das Untersetzungsgetriebe 64 mit einer Motorrotorwelle 14 mechanisch gekoppelt. Auf der Motorrotorwelle 14 sitzt ein permanentmagentischer Motorrotor 16. Der permanentmagnetische Motorrotor 16 ist umgeben von einem Motorstator 18. Das Untersetzungsgetriebe 64, der permanentmagnetische Motorrotor 16, der Motorstator 18 und die Motorrotorwelle 14 sind von einem Motorgehäuse 50 umgeben.

Die Figur 2 zeigt einen Längsschnitt des Motorrotors 16 und des Motorrotors 18 des elektrischen Antriebsmotors 40 im nicht-montierten Zustand. Der Motorrotor 16 weist einen Rotorgrundkörper 17 auf, in den mehrere Permanentmagnete 23 eingelassen sind, die mehrere magnetische Rotorpole bilden. Der Motorrotor 16 ist drehfest auf der Motorrotorwelle 14 fixiert.

Das elektrische Kfz-Aggregat 10 weist ferner einen Motorstator 18 auf. Der Motorstator 18 weist mehrere Statorspulen 22 auf, die mit den magentischen Polen des Motorrotors 16 in magnetischer Wechselwirkung stehen. Der Motorstator 18 weist ferner einen Kunststoff-Spulenträger auf, auf den die Statorspulen 22 aufgewickelt sind und in den mehrere Statorpoleisen eingegossen sind. Der Spulenträger 19 weist axial mittig eine Wellenöffnung 24 für das Einführen der Motorrotorwelle 14 in den Spulenträger 19 auf.

Die Wellenöffnung 24 des Spulenträgers 19 weist proximal eine zirkuläre Fase 32 auf, so dass das Einführen des vorauseilenden Wellenendes 26 der Motorrotorwelle 14 in den Spulenträger 19 erleichtert wird. Auch das vorauseilende Wellenende 26 der Motorrotorwelle 14 weist eine korrespondierende zirkuläre Fase 34 auf und ist derart abgeschrägt, dass das Einfädeln des Motorrotors 16 in den Motorstator 18 erleichtert wird. Durch die Abschrägung des vorauseilenden Wellenendes 26 und/ oder der Wellenöffnung 24 wird die Zielfläche für das Einfädeln vergrößert. Erst nach dem Einstecken des vorauseilenden Wellenendes 26 der Motorrotorwelle 14 in die Wellenöffnung 24 wirken nennenswerte radiale Magnetkräfte zwischen dem Motorrotor 16 und dem Motorstator 18. Durch diese Vorrichtung wird die Motorrotorwelle 14 an einem Längsende bereits abgestützt, bevor die radialen Magnetkräfte zwischen dem permanentmagnetischen Motorrotor 16 und dem Motorstator 18 eine nennenswerte Größe erreichen.

Die Motorrotorwelle 14 ist derart ausgebildet, dass im nicht-montierten Zustand das vorauseilende und abgeschrägte Wellenende 26 der Motorrotorwelle 14 in Eingriff mit der Wellenöffnung 24 kommt, bevor der permanentmagnetische Motorrotor 16 in den magnetischen Wirkbereich des Motorstators 18 gerät.

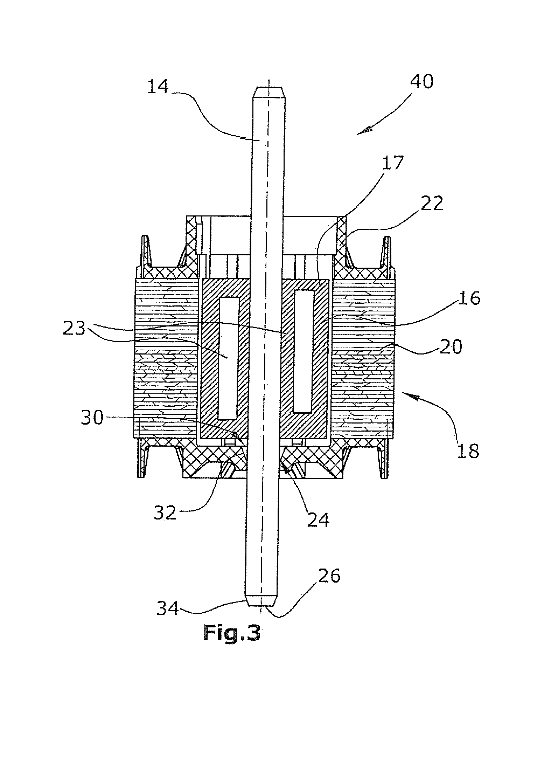

Die Figur 3 zeigt einen Längsschnitt des elektrischen Antriebsmotors 40 des Kfz-Aggregates 10 im montierten Endzustand. In diesem Endzustand ist der Motorrotor 16 mit seinen Permanentmagneten 23 axial vollständig in axiale Überdeckung gebracht mit dem Motorstator 18. Die Motorrotorwelle 14 ist durch die Fügehilfe 30, d.h. durch die mit einer Fase 32 versehene Wellenöffnung 24, in den Motorstator 18 eingefädelt, und sitzt nun spielfrei drehbar in der Wellenöffnung.

## Patentansprüche

1. Elektrisches Kfz-Aggregat (10) mit einem elektronisch kommutierten Antriebsmotor (40), der einen permanentmagnetischen Motorrotor (16) mit einer Motorrotorwelle (14), einen Motorstator (18) und ein Motorgehäuse (50) aufweist,
wobei beim Zusammenbau des Antriebsmotors (40) das vorauseilende Wellenende (26) der Motorrotorwelle (14) in eine feststehende Wellenöffnung (24) eingefädelt wird,
**dadurch gekennzeichnet, dass**
die Motorrotorwelle (14) derart ausgebildet ist, dass beim Zusammenbau das vorauseilende Wellenende (26) der Motorrotorwelle (14) in Eingriff mit der Wellenöffnung (24) kommt, bevor der permanentmagnetische Motorrotor (16) in den magnetischen Wirkbereich des Motorstators (18) gerät.

2. Elektrisches Kfz-Aggregat (10) nach einem der vorangegangenen Ansprüche, wobei die Motorrotorwelle (14) durch eine Fügehilfe (30) zentriert und in Längsrichtung geführt wird, bevor in dem Wirkbereich radiale Magnetkräfte auf den Motorrotor (16) wirken.

3. Elektrisches Kfz-Aggregat (10) nach einem der vorangegangenen Ansprüche, wobei das vorauseilende Wellenende (26) der Motorrotorwelle (14) und die Wellenöffnung (24) miteinander in Eingriff kommen, bevor
sich der Motorrotor (16) und Statorpoleisen (20) des Motorstators (18) in Längsrichtung überlappen.

4. Elektrisches Kfz-Aggregat (10) nach einem der vorangegangenen Ansprüche, wobei die Wellenöffnung (24) durch einen Spulenträger (19) gebildet wird, auf den eine Motorspule (22) des Motorstators (18) aufgewickelt ist.

5. Elektrisches Kfz-Aggregat (10) nach einem der vorangegangenen Ansprüche, wobei der Spulenträger (19) aus einem Kunststoff-Spritzgussteil besteht.

6. Elektrisches Kfz-Aggregat (10) nach einem der vorangegangenen Ansprüche, wobei die Fügehilfe (30) durch jeweils eine zirkuläre Fase (34, 32) an dem vorauseilenden Wellenende (26) der Motorrotorwelle (14) und/oder der Wellenöffnung (24) gebildet wird, so dass das Einfädeln erleichtert wird.

7. Elektrisches Kfz-Aggregat (10) nach einem der vorangegangenen Ansprüche, wobei das Kfz-Aggregat (10) ein elektrisch betriebener Drosselklappenstutzen (42) ist.
